Europäisches Patentamt

European Patent Office

Office européen des brevets

(11) Publication number: **0 142 251**
**B1**

(12) **EUROPEAN PATENT SPECIFICATION**

(45) Date of publication of patent specification: **29.07.87**

(21) Application number: **84306409.8**

(22) Date of filing: **19.09.84**

(51) Int. Cl.⁴: **B 01 D 3/00, B 01 D 3/42**

(54) Procedure for eliminating temperature fluctuation of a liquid to be supplied into a distilling apparatus.

(30) Priority: **28.09.83 FI 833503**

(43) Date of publication of application:
**22.05.85 Bulletin 85/21**

(45) Publication of the grant of the patent:
**29.07.87 Bulletin 87/31**

(84) Designated Contracting States:
**CH DE FR GB LI NL SE**

(56) References cited:
**FR-A-2 482 979**
**GB-A-1 013 871**
**GB-A-1 516 683**

(73) Proprietor: **OY-FINN-AQUA LTD.,**
**Hankasuontie 4-6**
**SF-00390 Helsinki 39 (FI)**

(72) Inventor: **Huhta-Koivisto, Esko**
**Saynavatie 4 B**
**02170 Espoo (FI)**

(74) Representative: **Lee, Philip Graham et al**
**MARKS & CLERK 57/60 Lincoln's Inn Fields**
**London WC2A 3LS (GB)**

Courier Press, Leamington Spa, England.

# Description

The present invention relates to procedure for eliminating temperature fluctuations of a liquid to be distilled which is being supplied into a distilling apparatus. In this procedure feed water is caused to flow by a first branch line through a distillate heat exchanger and by another branch line through an effluent heat exchanger for preheating the feed water, the effluent being caused to flow from the distilling apparatus by an effluent line to an effluent heat exchanger for recovery of the heat contained in the effluent, and the mixture of distillate, vapour and gases being conducted from the distilling apparatus by a flow line to a degassing heat exchanger in which the heat contained in the mixture is recovered and the recovered heat is utilized towards preheating the feed water by conducting the feed water after the distillate heat exchanger and the effluent heat exchanger by a header line through the degassing heat exchanger and further by a tubular connector to the distilling apparatus.

In distilling apparatus, for instance in those operating according to the thermocompressor principle, air is generated during operation, and this air must be exhausted from the distilling apparatus. One such distilling apparatus operating by the thermocompressor principle, and representing the state of the art is for example the subject of Finnish Patent No. 61999. In all types of distilling apparatus known in the art, air venting is by way of air venting holes, through which the air can escape into the atmosphere. Such a design solution is obviously not advantageous with a view to the energy economy of the distilling apparatus.

In EP—A—0127290, filed 3.4.84, published 5.12.84, and claiming a priority of 20.5.83 a procedure is disclosed in which the gases produced in the distilling apparatus during operation can be removed in a sensible way and can be utilized. In this prior art procedure, the mixture of distillate, vapour and gases is conducted from the distilling apparatus by a flow line to a degassing heat exchanger in which the heat contained in the mixture is recovered and the recovered heat is utilized for preheating the feed water, by conducting the feed water after a distillate heat exchanger and an effluent heat exchanger by a header line through a degassing heat exchanger, and further by a tubular connector to the distilling apparatus.

In various kinds of distilling apparatus, such as for instance those operating according to the thermocompressor principle, another harmful problem is also encountered. The temperature of the liquid to be distilled which is being supplied into the distilling apparatus may vary most appreciably. The result is that the temperature inside the distilling apparatus varies, and this is detrimental. The temperature variation within the distilling apparatus has to be eliminated or stabilized in one way or another.

In the designs known in the art, stabilisation of the temperature fluctuations has been solved as follows. The tubular connector leading to the distilling apparatus is disposed to run through an electrically heated heating element, the temperature of the liquid to be distilled and supplied into the distilling apparatus being hereby elevated with the aid of external electric energy in case the temperature of the liquid to be distilled which is being supplied is too low.

This prior art solution is unsatisfactory and, above all, it is uneconomical. It should be noted that the difference between the minimum and maximum feed water temperature may even be as high as 20°C. Thus, this is about one-third of the total pre-heat exchange. If this heat quantity has to be introduced, for the purpose of stabilizing, by using external electric energy, its amount is of the same order of magnitude as the energy drawn by the thermocompressor.

The object of the invention is to achieve an improvement in distilling apparatus as known at present. The more detailed object of the invention is to provide a procedure in which the temperature fluctuations of the liquid to be distilled and which is being supplied into the distilling apparatus can be eliminated in a simple and economical manner.

The aims of the invention are accomplished by a procedure which is characterized in that the feed water is caused to flow by a first branch line (14a) through a distillate heat exchanger (12) and by a second branch line (14b) through an effluent heat exchanger (13) for preheating the feed water, the effluent water being caused to flow from the distilling apparatus (10) by an effluent line (19) to an effluent heat exchanger (13) for recovering the heat contained in the effluent, and the mixture of distillate, vapour and gas being conducted from the distilling apparatus (10) by a flow line (16) to a degassing heat exchanger (11), wherein the heat contained in the mixture is recovered and the recovered heat is utilized in preheating the feed water by conducting the feed water after the distillate heat exchanger (12) and said effluent heat exchanger (13) by a header line (15) through said degassing heat exchanger (11) and further by a tubular connector (20) to the distilling apparatus (10), the degassing heat exchanger (11), the distillate heat exchanger (12) and the effluent heat exchanger (13) formed to have such a high capacity that the distilling apparatus (10) will, in conditions consistent with feed water minimum temperature (Tmin), operate without need of external energy, and that in said first branch line (14a) there is a by-pass line (22) through which part of the feed water is caused to flow past said distillate heat exchanger (12) to said header line (15) in case the temperature (T) of the feed water is higher than said minimum temperature (Tmin).

It has been recognised that in the procedure of the invention the degassing heat exchanger, the distillate heat exchanger and the effluent heat exchanger must have such a high capacity that the distilling apparatus will operate without external energy needs in conditions consistent with minimum temperature of the liquid to be distilled that is being supplied. Secondly, in the branch of the feed line passing through the distillate heat exchanger there is disposed a by-pass branch through which part of the liquid to be distilled which is being supplied is caused to flow past the distillate heat exchanger to the line leading to the degassing heat exchanger in case the temperature of the liquid to be distilled that is being supplied is higher than the minimum temperature of the liquid to be distilled that is being supplied. Such a by-pass flow branch has been provided with a flow restrictor, which is controlled by a thermostat placed within the distilling apparatus.

The solution as taught by the invention naturally increases the total cost of the distilling apparatus by about 10%. On the other hand, the design of the invention permits energy savings which are of the order of up to about 50%, for which reason the solution as taught by the invention is, in its overall effect, considerably more profitable than the design previously known, in which external electric energy is used.

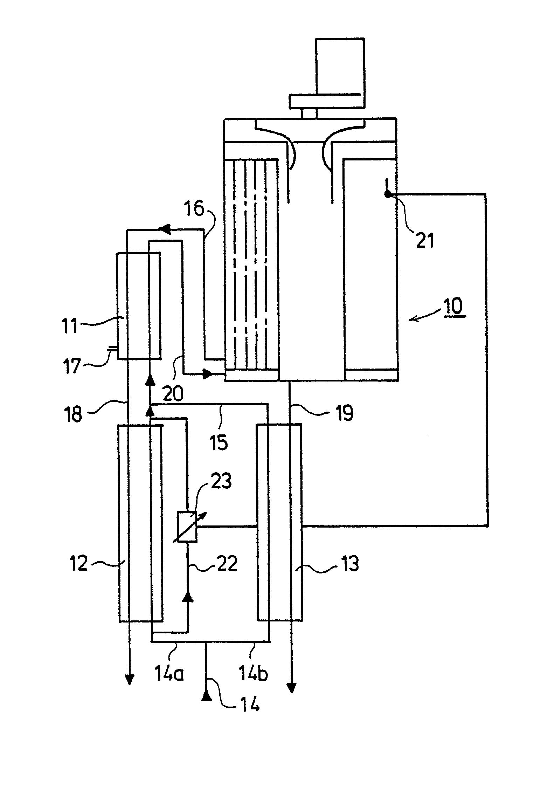

The invention is explained in detail by referring to a preferred embodiment of the invention, which is illustrated in the accompanying drawing, but to which the invention is not meant to be exclusively confined.

In the drawing, there is shown a distilling apparatus 10 which as regards its construction may be of any known type and it may for instance be the distilling apparatus operating according to the thermocompressor principle disclosed in the Finnish Patent No. 61999.

Also shown is a degassing heat exchanger 11, a distillate heat exchanger 12 and an effluent heat exchanger 13. A feed line 14 for the liquid to be distilled is divided into branches 14a and 14b, the branch 14a passing through the distillate heat exchanger 12, while the branch 14b similarly passes through the effluent heat exchanger 13. Also shown is a header line 15 for the branches 14a and 14b.

The mixture of distillate, vapour and gas is conducted from the distilling apparatus 10 by a tubular connector 16 to the degassing heat exchanger 11. This mixture flow is condensed in the degassing heat exchanger 11 to liquid, and the gases are free to escape through the gas vent hole 17 into the atmosphere. The recovered thermal energy has been disposed to heat the feed water flowing in the line 14, 14a, 14b, 15. The feed water is conducted after the degassing heat exchanger 11 by the line 20 to the distilling apparatus 10. In the lower part of the degassing heat exchanger 11 is a tubular connector 18 through which the distillate is withdrawn for use. From the distilling apparatus 10, a tubular connector 19 leads to the effluent heat exchanger 13, and the effluent flows along this line 19 and releases its heat in the effluent heat exchanger 13.

The layout described above enables the heat energy contained in the gas and vapour produced in the distilling apparatus 10 to be sensibly removed and utilized. As a consequence, during operation no separate feed water preheating is required in the distilling apparatus 10, instead of which it is possible by the combined effect of the distillate heat exchanger 12 and the effluent heat exchanger 13, and of the degassing heat exchanger 11, to heat the feed water to an adequate degree.

The fundamental realization of the invention implies that the preheat exchangers 11, 12 and 13 have been constructed to have such a high capacity that the distilling apparatus 10 will, in conditions consistent with minimum temperature of the liquid to be distilled, operate without need of external energy. Secondly, in the branch line 14a there has to be provided a by-pass line 22, by which part of the feed water is conducted past the distillate heat exchanger 12 into the header line 15 if the temperature T of the feed water is higher than the minimum temperature Tmin. The by-pass line has been provided with an adjustable flow restrictor 23, which has been disposed to be controlled by a thermostat 21 placed within the distilling apparatus 10.

In practice, Tmin of the feed water is about +5°C and similarly Tmax is about +25°C. As the temperature T of the feed water varies between the minimum and maximum temperatures Tmin and Tmax, the thermostat 21 automatically supplies a control pulse to the adjustable flow restrictor 23, which steplessly adjusts the amount of feed water passing through the by-pass line in each instance.

**Claims**

1. A procedure for eliminating the temperature fluctuations of a liquid to be distilled supplied into a distilling apparatus characterised in that the feed water is caused to flow by a first branch line (14a) through a distillate heat exchanger (12) and by a second branch line (14b) through an effluent heat exchanger (13) for preheating the feed water, the effluent water being caused to flow from the distilling apparatus (10) by an effluent line (19) to an effluent heat exchanger (13) for recovering the heat contained in the effluent, and the mixture of distillate, vapour and gas being conducted from the distilling apparatus (10) by a flow line (16) to a degassing heat exchanger (11), wherein the heat contained in the mixture is recovered and the recovered heat is utilized in preheating the feed water by conducting the feed water after the distillate heat exchanger (12) and said effluent heat exchanger (13) by a header line (15) through said degassing heat exchanger (11) and further by a tubular connector (20) to the distilling apparatus (10), the degassing heat exchanger (11), the distillate heat exchanger (12) and the effluent heat exchanger (13) formed to have such a high capacity that the distilling apparatus (10) will, in conditions consistent with feed water minimum temperature (Tmin), operate without need of external energy, and that in said first branch line (14a) there is a by-pass line (22) through which part of the feed water is caused to flow past said distillate heat exchanger (12) to said header line (15) in case the temperature (T) of the feed water is higher than said minimum temperature (Tmin).

2. A procedure according to Claim 1, characterized in that the quantity of feed water flowing in the by-pass line (22) is controlled with an adjusting means (23) which a thermostat (21) disposed inside the distilling apparatus (10) has been arranged to control.

3. A procedure according to Claim 2, characterized in that said adjusting means (23) is a controllable flow restrictor.

**Patentansprüche**

1. Verfahren zur Verhinderung von Temperaturschwankungen bei einer zu destillierenden Flüssigkeit, die einem Destillationsapparat zugeführt wird, dadurch gekennzeichnet, dass das Speisewasser durch eine erste Zweigleitung (14a) durch einen Destillat-Wärmeaustauscher (12), und durch eine zweite Zweigleitung (14b) durch einen Ablaufwasser-Wärmeaustauscher (13) zum Vorwärmen des Speisewassers fliesst, wobei das Ablaufwasser vom Destillationsapparat (10) durch eine Leitung (19) zu einem Ablaufwasser-Wärmeaustauscher (13) zur Wiedergewinnung der im Ablaufwasser und in der Destillatmischung enthaltenen Wärme fliesst, dass Dampf und Gas vom Destillationsapparat (10) durch eine Leitung (16) zu einem Entgasungs-Wärmeaustauscher (11) abgeleitet wird, wobei die in der Mischung enthaltene Wärme wiedergewonnen wird, und diese Wärmze zum Vorwärmen des Speisewassers benutzt wird, das nach dem Destillat-Wärmeaustauscher (12) und dem Ablaufwasser-Wärmeaustauscher (13) von der Druckkesselleitung (15) durch den Entgasungs-Wärmeaustauscher (11) und ferner durch ein rohrförmiges Verbindungsstück (20) zum Destillationsapparat (10), wobei der Entgasungs-Wärmeaustauscher (11), der Destillations-Wärmeaustauscher (12) und der Ablaufwasser-Wärmeaustauscher (13) derart ausgebildet sind, dass die Kapazität derart gross ist, dass der Destillationsapparat (10) unter Bedingungen, die vom Mindesttemperatur ($T_{min}$) abhängig sind, ohne Zufur von externer Energie betrieben werden können, und dass in der ersten Zweigleitung (14a) eine Umleitungsverbindung (22) besteht, durch welche ein Teil des Speisewassers am Destillat-Wärmeaustauscher (12) zur Druckkesselleitung (15) vorbeifliesst, falls die Temperatur (T) des Speisewassers höher ist als die genannte Mindesttemperatur ($T_{min}$).

2. Verfahren nach Anspruch 1, dadurch gekennzeichnet, dass die Speisewassermenge, die durch die Umleitungsverbindung (22) fliesst, mittels einer Einstellvorrichtung (23) gesteuert wird, für die ein Thermostat (21) innerhalb des Destillationsapparats (10) als Steuerung dient.

3. Verfahren nach Anspruch 2, dadurch gekennzeichnet, dass die Einstellvorrichtung (23) ein steuerbarer Strömungsbegrenzer ist.

**Revendications**

1. Procédé pour éliminer les fluctuations de température d'un liquide à distiller alimentant un appareil de distillation, caractérisé en ce qu'on fait passer l'eau d'alimentation, par un premier embranchement (14a), par un échangeur de chaleur de distillat (12) et, par un second embranchement (14b), par un échangeur de chaleur d'écoulement de sortie (13) pour préchauffer l'eau d'alimentation, en faisant passer l'eau de sortie de l'appareil de distillation (10), par une conduite d'écoulement de sortie (19), à un échangeur de chaleur d'écoulement de sortie (13) pour récupérer la chaleur contenue dans l'écoulement de sortie, et en faisant passer le mélange de distillat, de vapeur et de gaz de l'appareil de distillation (10), par une conduite d'écoulement (16), à un échangeur de chaleur de dégazage (11), la chaleur contenue dans le mélange étant récupérée et la chaleur récupérée étant utilisée pour préchauffer l'eau d'alimentation en faisant passer l'eau d'alimentation, après l'échangeur de chaleur de distillat (12) et ledit échangeur de chaleur d'écoulement de sortie (13), par une conduite collectrice (15), par ledit échangeur de chaleur de dégazage (11), puis, par un raccord tubulaire (20), dans l'appareil de distillation (10), l'échangeur de chaleur de dégazage (11), l'échangeur de chaleur de distillat (12) et l'échangeur de chaleur d'écoulement de sortie (13) étant conformés pour avoir une capacité suffisamment élevée pour que l'appareil de distillation (10) fonctionne, dans des conditions compatibles avec la température minimale d'eau d'alimentation (Tmin), sans nécessiter d'énergie externe, et en ce que, dans le premier embranchement (14a), il y a une conduite de dérivation (22) par laquelle une partie de l'eau d'alimentation est amenée à franchir ledit échangeur de chaleur de distillat (12) pour rejoindre la conduite collectrice (15), dans le cas où la température (T) de l'eau d'alimentation est supérieure à ladite température minimale (Tmin).

2. Procédé selon la revendication 1, caractérisé en ce que la quantité d'eau d'alimentation s'écoulant dans la conduite de dérivation (22) est réglée avec un moyen d'ajustement (23) qu'un thermostat (21) disposé à l'intérieur de l'appareil de distillation (10) a été agencé pour commander.

3. Procédé selon la revendication 2, caractérisé en ce que ledit moyen d'ajustement (23) est un limiteur de débit pouvant être commandé.